Europäisches Patentamt

(19) European Patent Office

Office européen des brevets

(11) Publication number: **0 196 350**
**B1**

(12) **EUROPEAN PATENT SPECIFICATION**

(45) Date of publication of patent specification: **23.11.89**

(21) Application number: **85104038.6**

(22) Date of filing: **03.04.85**

(51) Int. Cl.⁴: **C 10 L 1/16, F 15 D 1/00**

(54) **Improved use of flow improvers.**

(43) Date of publication of application:
**08.10.86 Bulletin 86/41**

(45) Publication of the grant of the patent:
**23.11.89 Bulletin 89/47**

(84) Designated Contracting States:
**BE DE FR GB IT NL SE**

(56) References cited:
**GB-A-2 074 175**
**US-A-3 559 664**

(73) Proprietor: **Conoco Inc.**
**1000 South Pine Street P.O. Box 1267**
**Ponca City Oklahoma 74603 (US)**

(72) Inventor: **Mack, Mark Philip**
**301 W. Hartford Apt. 311**
**Ponca City Oklahoma 74601 (US)**

(74) Representative: **Patentanwälte Dipl.-Ing. A.**
**Grünecker, Dr.-Ing. H. Kinkeldey, Dr.-Ing. W.**
**Stockmair,**
**Dr. rer. nat. K. Schumann, Dipl.-Ing. P.H. Jakob,**
**Dr. rer. nat. G. Bezold Maximilianstrasse 58**
**D-8000 München 22 (DE)**

Courier Press, Leamington Spa, England.

## EP 0 196 350 B1

**Description**

This invention relates to a method for reducing friction loss encountered in the transfer of liquids by fluid flow through the use of a flow improving or drag reducing substance.

It is well known that when a fluid is pumped or otherwise caused to flow through a conduit under pressure, energy is expended as a result of friction, and a frictional pressure loss results. Such frictional pressure losses are particularly large under turbulent flow conditions, for example when the velocity of a liquid passing through a conduit is such that turbulent flow results, a large frictional pressure loss is encountered. This problem of high frictional pressure loss or pressure drop in the flow of liquids through a conduit is commonly encountered in industrial operations wherein hydrocarbon liquids are conveyed through pipelines at high fluid velocities.

In order to compensate for the frictional pressure loss encountered from the turbulent flow of such hydrocarbon liquids, considerable energy, generally in the form of pumping horsepower, must be expended. Thus, reduction of the frictional pressure loss and the flow of such hydrocarbon liquids brings about an advantageous reduction of horsepower requirements or alternatively an increased flow rate of a hydrocarbon liquids under the same pumping conditions.

The art is aware of these problems as is represented by US—A—3,692,676, which discloses a method of reducing friction loss when fluids are pumped through pipelines by adding a high molecular weight poly-alpha-olefin. This patent teaches that such polymers reduce friction in the flowing liquid by reducing turbulence. A method of measuring performance of these polymers is defined as

$$\% \text{ Drag reduction} = \frac{(\text{pressure drop diesel} - \text{pressure drop polymer})}{\text{pressure drop diesel oil}} \times 100$$

US—A—3,748,266 and 3,758,406 relate to methods and compositions for reducing frictional pressure loss in hydrocarbon flows. Reduction in pressure loss is accomplished by adding a hopolymer such as a polyisobutylene having an intrinsic viscosity between 2 and 10 dl/g to allow a low total concentration of polymer to hydrocarbon of about 0.299 g/l (2.5 pounds per 1,000 gallons), respectively.

US—A—3,351,079 uses drag reducers comprising ethylene, propylene and butylene terpolymers having a molecular weight up to about 1 million and useful at concentrations of from 0.01 to about 0.3 weight percent.

US—A—3,493,000 discloses high molecular weight cis-polyisoprene, cis-polybutadiene and ethylenepropylene copolymers used at concentrations of about 40 ppm.

US—A—3,559,664 discloses a method of reducing friction loss during flow of hydrocarbon liquids through conduits by addition to the liquids of a small amount of a copolymer of ethylenepropylene. It does not describe any specific concentration of the polymer/diluent solution added to the conduit.

GB—A—2,074,175 discloses a process for reducing friction loss in hydrocarbon liquids flowing through conduits comprising adding to the hydrocarbon liquids, in an amount varying from the minimum amount effective to reduce friction loss to about 100 ppm, a copolymer of butene-1 and at least one other alpha-monoolefin having 5 to 20 carbon atoms and having a weight average molecular weight sufficiently high to effect friction loss reduction in hydrocarbons flowing in pipelines, said copolymer containing about 10 to 90 mole percent butene-1 derived units and 10 to 90 mol percent units derived from said other alpha-monoolefin component based on the total number of moles of butene-1 and said other alpha-monoolefin component in the copolymer. A particular inherent viscosity is not described.

These references, while not exhaustive of the art in the area, generally represent such art. These references all deal with total concentration of drag reducing material in polymer and attribute various levels of drag reduction to such total concentration of polymers.

Drag reducing polymers currently in use are reputed to be useful at low levels, yet often in practice require higher levels in order to sufficiently reduce turbulent flow to a desirable extent. In view of the cost of these polymers, as well as the possible contamination effect if used in a finished product pipeline, it would be greatly advantageous to provide a method whereby such polymers are effective at lower concentrations, or in the alternative, provide much higher levels of drag reduction at equivalent concentrations in the flowing hydrocarbon fluid.

It is the object of the present invention to provide an improved method for reducing friction loss in hydrocarbon fluids.

Said object is achieved by a method for reducing friction loss in hydrocarbon fluids through conduits comprising adding to said hydrocarbon fluid a high molecular weight poly(alpha-olefin) suspended in a hydrocarbon diluent or suspending agent at a concentration of less than 10.0 weight percent when placed into the flowing hydrocarbon fluid and the total polymer concentration in the flowing hydrocarbon fluid ranging from 0.01 to 500 ppm, characterized in that the inherent viscosity of said poly(alpha-olefin) as measured in low polynuclear aromatic solvents at 25.0 to 25.6°C (77 to 78°F) at a shear rate of 300 reciprocals and at a concentration of 0.10 g/100 ml, is at least 11.0.

The poly-alpha-olefins can be homopolymers, copolymers, or terpolymers prepared by contacting alpha-olefins containing from 2 to 30 carbon atoms with a polymerization catalyst. The catalyst and method

2

of preparing these polymers is not critical other than the inherent viscosities of the resulting polymers must be greater than 11.0 dl/g at a shear rate of 300 s$^{-1}$, and that these materials be substantially soluble in the hydrocarbon liquid in order to reduce turbulent flow. It is preferred in the method of the present invention to have a polymer content of from 2 to 6 weight percent at an inherent viscosity of from 12.0 to 15.0 dl/g for maximum effectiveness.

The drag reducing polymer, once prepared, is placed in a suitable carrier substance. These materials are usually inactive hydrocarbon solvents. Representative examples of such materials are straight chain aliphatic compounds or branched hydrocarbons such as ethane, propane, isobutane, butane, pentane, hexane, heptane, or isooctane, octane. Also useful are alicyclic hydrocarbons such as cyclohexane, methylcyclopentane, and tetralene. Aromatic hydrocarbons can also be used as represented by benzene, toluene, and xylene. Mixtures and analogues of these compounds are also useful as represented by Molex (tradename of Universal Oil Products) raffinate, which is a complex mixture of branched aliphatic, cyclic aliphatic, aromatic and trace amounts of unbranched aliphatic hydrocarbons. Likewise useful are low polynuclear aromatic solvents. Further, the hydrocarbon diluent can be an alpha-olefin.

It should be noted in the context of the present invention that when the alpha-olefin drag reducing polymer contains significant amounts of lower olefins such as ethylene and butene, a small but significant amount of hydrocarbon-insoluble material may be produced. This hydrocarbon-insoluble material is apparent in the diluted mixture prepared for injection into the flowing hydrocarbon liquid, but such materials dissolve in the much larger volumes of the flowing hydrocarbon fluid. Therefore, in the context of the present invention, these materials may be dissolved or suspended or a combination of these physical states when injected into the pipeline. In either case, the term "suspended" as used in this specification and claims indicates that the polymer can be totally or partially dissolved, with any undissolved polymer suspended in the hydrocarbon medium.

In any event, once in this state, the material is injected into a conduit containing flowing hydrocarbons. In contrast to materials which are produced at lower inherent viscosities, or those having high inherent viscosities which are injected at concentrations of 10% by weight or more, the method of the present invention shows a surprising increase in drag reduction effectiveness.

The hydrocarbon liquids in which the additive used in the method of this invention is effective include oleaginous or petroliferous liquids as well as emulsions, suspensions, and dispersions thereof. For example crude oil, refined petroleum products such as kerosene, pale oil, diesel oil, fuel oil or asphalt, water-in-oil emulsions or surfactants. Where the hydrocarbon liquid is a hydraulic fracturing fluid, it may also contain solid particulate matter such as sand as a propping agent, a fluid loss control additive and other materials commonly added to fracturing fluids.

It is preferred that the drag reducing polymer is formed from olefins containing from 5 to 20 carbon atoms which optionally can contain from 0.01 to 20% by weight of ethylene or propylene, and up to 50% butene-1 comonomer. Polymers so produced have an inherent viscosity of from about 11.5 to about 15.0 and are placed in the flowing hydrocarbon fluid at a concentration of from 0.1 to 3.5% by weight of the diluent or suspending agent.

The invention is more concretely described with reference to the examples below wherein all parts and percentages are by weight unless otherwise specified.

Example 1

A catalyst slurry was prepared by mixing under an inert atmosphere of dry argon, 0.104 g of TiCl$_3$ · AA (Type 1.1 catalyst from Stauffer Chemical Company), 0.36 ml of dried and deoxygenated Molex raffinate (obtained from Conoco Chemicals; Molex is a trademark of Universal Oil Products). This mixture was stirred for approximately 2 min in a dry box. Di-n-butylether (60 µl, dried and degassed) was added. The mixture was then stirred vigorously for 15 min in a small vial equipped with a microstir-bar. This mixture was then transferred to a gas-tight syringe. The vial was washed with 10 ml of low polynuclear aromatic solvent (LPA) and the wash material added to the same syringe.

Example 2

The catalyst of Example 1 was used in the preparation of a drag reducing polymer.

A mixture of 189 ml of dried and deoxygenated low polynuclear aromatic solvent, 3.6 ml of diethylaluminum chloride (DEAC, purchased from Texas Alkyls as a 10% solution in heptane) and 41 ml of dried and degassed decene-1 was placed into a clean, dry 1-quart bottle under an atmosphere of dry argon. The mixture was cooled to −7°C and agitated in a shaker bath at 500 rpm.

The catalyst mixture described in Example 1 was added to initiate the polymerization. The mixture became thick. After 3 h the bottle was removed from the temperature bath. A thermometer was placed into the center of the viscous material, recording a temperature of 6°C. The polymerization was, therefore, semi-adiabatic due to the insulation effect of the poly(decene-1) mixture.

Approximately 1.7 ml of methanol was added to deactivate the catalyst. The polymer mixture was stabilized with about 0.01 weight percent butylated hydroxy toluene (BHT) as an antioxidant. The weight of polymer produced was determined by pouring 84.9 g of the deactivated polymer mixture into 400 ml of isopropyl alcohol with sufficient mixing to precipitate a viscous material containing poly(decene-1). The substance was washed with an additional 400 ml of isopropyl alcohol, filtered and washed with 400 ml of

3

methanol to remove catalyst residue. The poly(decene-1) was collected by vacuum filtration and dried in a vacuum oven overnight to produce 4.2075 g of polymer. The polymer solution thus contained 4.95% poly(decene-1). This polymer solution was used to determine the inherent viscosity of dissolved polymer. The inherent viscosity was determined in LPA solvent at 25.3±0.3°C (77.5±0.5°F) using a Cannon-Ubbelohde four bulk shear dilution viscometer at a shear rate of 300 reciprocal s.

Example 3

A calibrated Cannon-Ubbelohde Four-Bulb Shear Dilution Viscometer is used to measure the flow time for both solvent and polymer samples. Inherent viscosity values are calculated for each of the four bulbs. These calculated values are plotted as a function of shear rate, and the resulting plot is used to obtain the inherent viscosity at a shear rate of $300 \, s^{-1}$.

Approximately 0.5 g of the drag reducer material (for example, a solution containing 4.95 weight percent poly(decene-1) in LPA solvent as obtained in Example 2) is placed into a clean, dry Erlenmeyer flask equipped with a ground glass stopper. LPA solvent is added to generate a concentration of 0.10 g polymer/100 ml. The stoppered flask is placed on a magnetic stirrer and stirred until dissolution is completed. The stirring speed is set to minimize shear degradation of the polymer. Shear degradation will produce an anomalously low inherent viscosity value.

LPA solvent (10 ml) is placed into the viscometer, and the viscometer is immersed into a water bath. The system is allowed to equilibrate for at least 20 min.

The efflux time for each bulb is determined according to the procedure supplied with the viscometer.

The viscometer is cleaned and dried by flushing with hexane, then with acetone. The efflux time for the sample solution is measured following the same procedure as used for the LPA solvent.

The inherent viscosity for each bulb is calculated using the following equations:

$$\text{Relative Viscosity } (\eta_{rel}) = t_{soln.}/t_{solvent}$$

where,

$t_{soln.}$ = efflux time of the solution,
$t_{solvent}$ = efflux time of the solvent.

$$\text{Inherent Viscosity } (\eta_{inh}) = l_n \, \eta_{rel/c}$$

where,

C = concentration in g/dl.

The shear rate for each bulb is calculated using the relationship:

$$\text{Shear Rate } (\overset{o}{\gamma}) = K/t_{soln.}$$

where,

K = shear rate constant.

A plot of shear rate versus inherent viscosity is made. The inherent viscosity at a shear rate of $300 \, s^{-1}$ is then determined.

Examples 4 to 8

The instant invention was demonstrated in a pipeline. A polymer solution containing 10.8% poly(decene-1) with an inherent viscosity of 11.9 dl/g at a shear rate of $300 \, s^{-1}$ was made using a procedure similar to Examples 1 and 2. Conditions and quantities were adjusted to yield 10.8% polymer. Approximately 12 weight percent decene-1 was charged into the polymerization vessel. The polymerization was terminated with alcohol. The weight percent polymer content was determined by the procedure set forth in Example 2. The inherent viscosity of the dissolved polymer was determined by the four bulb viscometer procedure as described in Example 3.

The 10.8% polymer solution was diluted with LPA to yield a 5.95% and a 0.94% polymer solution. A Pfaudler mixer was used to conduct the dilution. The agitator was set at a low mixing speed to prevent shear deterioration of the polymer.

The effectiveness of the drag-reducing materials so produced was tested in the Kingfisher pipeline in Oklahoma. This crude oil pipeline runs from the Kingfisher pump station near Hennessey, Oklahoma, to a tank storage area in Orlando, Oklahoma. The inner diameter of the pipeline is 20.9 cm (8.24 inches) and the total length of 45.5 km (28.3 miles). Drag reducer performance was evaluated in the first 11.9 Km (7.4 mile) section of the pipeline from the Kingfisher pump station. Dual-piston positive displacement pumps were used to maintain pipeline flow. The drag reducers were injected directly into the 20.9 cm (8.24 inch) line downstream of the pump at Kingfisher. The crude oil flow rate during the tests was approximately 151.7 l/h (1,272 barrels per hour), which corresponds to a pipeline flow velocity of 161.5 cm/s (5.3 ft/s). As a control, a poly(decene-1) solution was prepared containing 6.10% polymer having an inherent viscosity of 9.5 dl/g at a shear rate of $300 \, s^{-1}$.

Test results are set forth in Table 1, where Examples 4 and 8 are control experiments, and Examples 5, 6 and 7 demonstrate the present invention.

4

EP 0 196 350 B1

TABLE 1

| Example | Weight percent polymer | Inherent viscosity (dl/g at 300 s⁻¹) | Polymer injected into pipeline (ppm) | Percent drag reduction |
|---|---|---|---|---|
| 4 | 10.8 | 11.9 | 4.0 | 33 |
| 5 | 5.95 | 11.9 | 3.1 | 36 |
| 6 | 0.94 | 11.9 | 3.2 | 39 |
| 7 | 0.94 | 11.9 | 0.84 | 19 |
| 8 | 6.10 | 9.5 | 3.1 | 20 |

Control Example 4 shows that injection of a 10.8 wt.% 11.9 inherent viscosity material into the pipeline at approximately 4.0 ppm level of polymer content resulted in 33% drag reduction in the 11.9 km (7.4 mile) section of the pipeline. An 11.9 inherent viscosity material containing 5.95 wt.% polymer and 0.94 wt.% polymer resulted in much better drag reduction performance. Less polymer was required to yield greater drag reduction. Surprisingly, the 0.94 wt.% material (Example 6) was more effective than the 5.95 wt.% material (Example 5).

Examples 9 to 11

A test was carried out in the Brent pipeline system in the North Sea connecting Conoco's Murchison Platform and Shell's Dunlin-A platform. This connecting pipeline segment is 37.5 cm (14.75 inches) in diameter (ID) and 18.9 km (11.74 miles) in length and carries crude oil production from the Murchison platform. The Murchison crude properties are:

API gravity      38.5°

Viscosity, $C_s$      11.3—12.4 at 0°C (32°F)
                        5.4—5.8 at 21°C (70°F)
                        3.5—3.7 at 38°C (100°F)

In these tests, three materials were employed. Comparative Example 9 used a 10.8 wt.% poly(decene-1) solution with an inherent viscosity of 11.9 dl/g at a shear rate of 300 s⁻¹. Example 10 used a 10.8 wt.% material diluted to approximately 3.0 wt.% polymer content in LPA solvent. Again, the dilution was conducted in a Pfaudler mixer under conditions which prevented shear degradation of the polymer. The inherent viscosity of the polymer was 11.9 dl/g at a shear rate of 300 s⁻¹. Example 11 used a drag reducer which contained approximately 10.5 wt.% poly(decene-1) with an inherent viscosity of 9.5 dl/g at a shear rate of 300 s⁻¹.

Comparative Example 11 was also conducted using a drag reducer with an inherent viscosity of 9.5 at a polymer content of 10.5% prior to injecting into the pipeline. Test results are presented in Table 2.

TABLE 2

| Example | Weight percent polymer | Inherent viscosity (dl/g @ 300 s⁻¹) | Polymer injected into pipeline (ppm) | Percent drag reduction | Calculated flow increase |
|---|---|---|---|---|---|
| 9 | 10.8 | 11.9 | 10 | 19 | 12 |
| 10 | 3.0 | 11.9 | 10 | 50 | 46 |
| 11 | 10.5 | 9.5 | 22 | 17 | 11 |

The test results clearly show that performance of the 11.9 inherent viscosity material is greatly enhanced by dilution prior to injection into the pipeline. When comparing Example 9 with Example 10, a flow increase of about 46% was obtained using the diluted material (10), compared to only a 12% increase in flow using the concentrated drag reducer (9). Comparative Examples 9 and 11 showed only 12% and 11% flow increase, respectively. There was a great deal of difference in inherent viscosities.

While theoretical in nature, and I do not wish to be bound thereby, it is believed that the higher weight concentration polymer solutions require longer times to go into solution with the crude oil. The higher inherent viscosity material, however, provides for better drag reduction if the material is dissolved in the crude oil. This hypothesis is supported by the data as evidenced by comparing Example 5 with Example 8.

5

## EP 0 196 350 B1

### Claims

1. A method for reducing friction loss in hydrocarbon fluids through conduits comprising adding to said hydrocarbon fluid a high molecular weight poly(alpha-olefin) suspended in a hydrocarbon diluent or suspending agent at a concentration of less than 10.0 weight percent when placed into the flowing hydrocarbon fluid and the total polymer concentration in the flowing hydrocarbon fluid ranging from 0.01 to 500 ppm, characterized in that the inherent viscosity of said poly(alpha-olefin) as measured in low polynuclear aromatic solvents at 25.0 to 25.6°C (77 to 78°F) at a shear rate of 300 reciprocal s and at a concentration of 0.10 g/100 ml, is at least 11.0.

2. The method of claim 1, wherein the concentration of polymer prior to insertion is 5.0 weight percent or less of the hydrocarbon diluent or suspending agent.

3. The method of claim 1 or 2, wherein at least half of the poly(alpha-olefin) polymer is formed from olefins containing from 5 to 20 carbon atoms.

4. The method of claim 3, wherein from 0.01 to 20% by weight of the poly(alpha-olefin) polymer is formed from ethylene or propylene.

5. The method of any of claims 1 to 4, wherein from 1 to 50% by weight of the poly(alpha-olefin) is formed from butene-1 comonomer.

6. The method of any of claims 1 to 5, wherein the polymer placed in the flowing hydrocarbon fluid has an inherent viscosity of from 11.5 to 15.0.

7. The method of any of claims 1 to 6, wherein the polymer solution or mixture placed in the flowing hydrocarbon fluid has a polymer concentration of from 0.1 to 3.5% by weight of the diluent or suspending agent.

### Patentansprüche

1. Verfahren zur Verringerung des Reibungsverlustes in Kohlenwasserstofflüssigkeiten durch Leitungen, bei dem der Kohlenwasserstofflüssigkeit ein Poly(alpha-olefin) mit hohem Molekulargewicht, suspendiert in einem Kohlenwasserstoffverdünnungsmittel oder -suspendiermittel in einer Konzentration von weniger als 10,0 Gew.-%, wenn es in die fließende Kohlenwasserstofflüssigkeit gegeben wird, zugegeben wird, wobei die Gesamtpolymerkonzentration in der fließenden Kohlenwasserstofflüssigkeit bei 0,01—500 ppm liegt, dadurch gekennzeichnet, daß die inhärente Viskosität des Poly(alpha-olefins), gemessen in niedrigmehrkernigen aromatischen Lösungsmitteln bei 25,0—25,6°C) (77—78°F) bei einer Schergeschwindigkeit von 300 reziproken s und bei einer Konzentration von 0,10 g/100 ml, wenigstens 11,0 beträgt.

2. Verfahren nach Anspruch 1, worin die Konzentration des Polymers vor der Einbringung 5,0 Gewichtsprozent oder weniger des Kohlenwasserstoffverdünnungsmittels oder -suspendiermittels beträgt.

3. Verfahren nach Anspruch 1 oder 2, worin wenigstens die Hälfte des Poly(alpha-olefin) polymers aus Olefinen, enthaltend 5 bis 20 Kohlenstoffatome, gebildet wird.

4. Verfahren nach Anspruch 3, worin 0,01 bis 20 Gew.-% des Poly(alpha-olefin) polymers aus Ethylen oder Propylen gebildet wird.

5. Verfahren nach einem der Ansprüche 1 bis 4, worin 1 bis 50 Gew.-% des Poly(alpha-olefins) aus Buten-1-Comonomer gebildet wird.

6. Verfahren nach einem der Ansprüche 1 bis 5, worin das in die fließende Kohlenwasserstofflüssigkeit gegebene Polymer eine inhärente Viskosität von 11,5 bis 15,0 besitzt.

7. Verfahren nach einem der Ansprüche 1 bis 6, worin die Polymerlösung oder -mischung, die in die fließende Kohlenwasserstofflüssigkeit gegeben wird, eine Polymerkonzentration von 0,1 bis 3,5 Gew.-% des Verdünnungsmittels oder Suspendiermittels besitzt.

### Revendications

1. Procédé pour réduire la perte par frottement dans des fluides hydrocarbonés dans des conduites, comprenant l'addition à ce fluide hydrocarboné d'une poly(alpha-oléfine) de masse moléculaire élevée en suspension, dans in diluant ou agent de suspension hydrocarboné, à une concentration inférieure à 10,0% en poids lorsqu'elle est introduite dans le fluide hydrocarboné s'écoulant, et la concentration totale en polymère dans le fluide hydrocarboné s'écoulant étant de 0,01 à 500 ppm, caractérisé en ce que la viscosité inhérente de cette poly(alpha-oléfine), mesurée dans des solvants pauvres en aromatiques polynucléaires de 25,0 à 25,60°C (77 à 78°F) à un gradient de cisaillement de 300/s et à une concentration de 0,10 g/100 ml, est d'au moins 11,0.

2. Procédé selon la revendication 1, dans lequel la concentration du polymère avant l'introduction est de 5,0% en poids ou moins du diluant ou de l'agent de suspension hydrocarboné.

3. Procédé selon les revendication 1 ou 2, dans lequel au moins la moitié du polymère de poly(alpha-oléfine) est formé d'oléfines en $C_5$ à $C_{20}$.

4. Procédé selon revendication 3, dans lequel de 0,01 à 20% en poids du polymère de poly(alpha-oléfine) sont formés d'éthylène ou de propylène.

6

5. Procédé selon l'une quelconque des revendications 1 à 4, dans lequel de 1 à 50% en poids de la poly(alpha-oléfine) sont formés de butène-1 comme comonomère.

6. Procédé selon l'une quelconque des revendications 1 à 5, dans lequel le polymère introduit dans le fluide hydrocarboné s'écoulant a une viscosité inhérente de 11,5 à 15,0.

7. Procédé selon l'une des revendications 1 à 6, dans lequel la solution ou le mélange de polymères introduit dans le fluide hydrocarboné s'écoulant a une concentration en polymère de 0,1 à 3,5% en poids du diluant ou de l'agent de suspension.